# EUROPEAN PATENT APPLICATION

(11) **EP 3 885 325 A1**
(43) Date of publication of application: **29.09.2021**
(21) Application number: 19887334.1
(22) Date of filing: 19.11.2019
(51) Int. Cl.: C03C 10/00, B32B 17/06, G02B 1/10, G02B 5/30

(54) **SILICA GLASS FILM**

(30) Priority: 23.11.2018 KR 20180145998
(71) Applicant: LG Chem, Ltd., Seoul 07336, (KR)
(72) Inventor: PARK, Kwang Seung, Daejeon 34122 (KR); OH, Hyun Taek, Daejeon 34122 (KR); SIN, Chang Hoon, Daejeon 34122 (KR); PARK, Moon Soo, Daejeon 34122 (KR)
(74) Representative: Goddar, Heinz J.
(86) International application number: PCT/KR2019/015835
(87) International publication number: WO 2020/106012

(57) **Abstract**

The present application relates to a silica glass film. The present application can provide, as a film having a silica network as a main component, a silica glass film capable of solving the disadvantages of the glass material, while having at least one or more advantages of the glass material. Such a silica glass film of the present application can be easily formed through a simple low temperature process without using expensive equipment.

## Description

### Technical Field

This application claims priority based on Korean Patent Application No. 10-2018-0145998 filed on November 23, 2018, the disclosure of which is incorporated herein by reference in its entirety.

The present application relates to a silica glass film.

### Background Art

Glass, which is an inorganic material, has excellent transparency and thermal stability, and good resistance to a vertical load and a tangential load, thereby having an advantage that it has excellent scratch resistance. However, since the glass has poor flexibility, is difficult to be processed, and requires processing at high temperatures, it is difficult to form a composite with organic materials such as polymers having poor thermal stability.

By forming a high density silica film, it may be considered to compensate for the disadvantages of the glass materials while taking the necessary advantages among the advantages of the glass materials. As the most common method of forming a silica film, a sol-gel process, in which a hydrolytically condensable material such as an alkoxy silane is applied, is known. However, in order to realize a silica film having the same physical properties as those of the glass material through the sol-gel process, there is still a problem in terms of formation of a composite with an organic material because a high temperature baking process for obtaining a high density film is required.

Alternatively, a PECVD (plasma enhanced chemical vapor deposition) method or a method of obtaining a glass-like film by curing a sol-gel coated film through an excimer laser or the like may be considered. Since these methods can form a silica film directly on an organic material, it is easy to form a composite with the organic material. However, expensive equipment is required for the application of the above method, the processes are complicated, and it is not easy to obtain a silica film having a thickness of a certain level or more or a large area silica film over a certain area.

### Disclosure

### Technical Problem

The present application relates to a silica glass film. It is one object of the present application to provide a film having a silica network as a main component, which can solve the disadvantages of the glass material, while having at least one or more advantages of the glass material. Such a silica glass film of the present application can be easily formed through a simple low temperature process without using expensive equipment.

### Technical Solution

Among physical properties mentioned in this specification, when the measured temperature and/or pressure affects the physical property value, the relevant physical property means a physical property measured at room temperature and/or normal pressure, unless otherwise specified.

In the present application, the term room temperature is a natural temperature without warming or cooling, which may mean, for example, any temperature in a range of about 10°C to about 30°C, or a temperature of 25°C or 23°C or so. Also, in the present application, unless otherwise specified, the unit of temperature is Celsius (°C).

In the present application, the term normal pressure is a natural pressure which is not particularly pressurized or decompressed, which may be, usually, 1 atmosphere or so, like atmospheric pressure.

In the present application, the term alkyl group, alkylene group or alkoxy group may mean a linear or branched alkyl group, alkylene group or alkoxy group, having 1 to 20 carbon atoms, 1 to 16 carbon atoms, 1 to 12 carbon atoms, 1 to 8 carbon atoms or 1 to 4 carbon atoms, or may mean a cyclic alkyl group, alkylene group or alkoxy group, having 3 to 20 carbon atoms, 3 to 16 carbon atoms, 3 to 12 carbon atoms, 3 to 8 carbon atoms or 3 to 6 carbon atoms, unless otherwise specified.

In the present application, the term alkenyl group may mean a linear or branched alkenyl group having 2 to 20 carbon atoms, 2 to 16 carbon atoms, 2 to 12 carbon atoms, 2 to 8 carbon atoms or 2 to 4 carbon atoms, or may mean a cyclic alkenyl group having 3 to 20 carbon atoms, 3 to 16 carbon atoms, 3 to 12 carbon atoms, 3 to 8 carbon atoms or 1 to 6 carbon atoms, unless otherwise specified.

In the present application, the term aryl group or arylene group may mean an aryl group or arylene group, having 6 to 24 carbon atoms, 6 to 18 carbon atoms or 6 to 12 carbon atoms, or may mean a phenyl group or a phenylene group, unless otherwise specified.

In the present application, the term epoxy group may mean a monovalent residue derived from cyclic ether having three ring constituent atoms or a compound comprising the cyclic ether, unless otherwise specified. The epoxy group may be exemplified by a glycidyl group, an epoxyalkyl group, a glycidoxyalkyl group or an alicyclic epoxy group, and the like. Here, the alicyclic epoxy group may mean a monovalent residue derived from a compound containing an aliphatic hydrocarbon ring structure and including a structure in which two carbon atoms forming the aliphatic hydrocarbon ring also form an epoxy group. As the alicyclic epoxy group, an alicyclic epoxy group having 6 to 12 carbons may be exemplified, and for example, a 3,4-epoxycyclohexylethyl group and the like may be exemplified.

The alkyl group, alkylene group, alkoxy group, alkenyl group, aryl group, arylene group or epoxy group may also be optionally substituted with one or more substituents.

The present application relates to a silica glass film. In the present application, the term silica glass film means a film having a silica network as a main component, which can exhibit the advantages of a glass material. However, the silica glass film need not show the same physical properties as those of the glass material, or exhibit all the advantages of the glass material, and if it can exhibit at least one or more of the advantages unique to the glass material, it corresponds to the glass film defined in the present application. In the present application, such a silica glass film may also be referred to as a silica film.

As one example, a film exhibiting steel wool resistance, which is described below, by including a silica network as a main component and simultaneously having scratch resistance similar to or equivalent to that of a glass material, may also be called a silica glass film.

The term silica network may mean a mesh or three-dimensional cage structure consisting of siloxane linkages (-Si-O-Si-) or comprising the same. In one example, the silica network may be a condensate of alkoxysilane to be described below. The silica network may comprise, for example, units of the following formula A and/or B, or may consist of such units. Here, the fact that the silica network consists of units of the following formula A and/or B means that the silica network contains only units of the following formula A and/or units of the following formula B.

[Formula A] RnSiO(4-n)/2

[Formula B] SiO_{3/2}L_{1/2}

In Formulae A and B, R is hydrogen, an alkyl group, an alkenyl group, an aryl group, an arylalkyl group, an epoxy group or a (meth)acryloyloxyalkyl group, n is 0 or 1, and L is a divalent linking group of any one selected from the group consisting of a linear, branched or cyclic alkylene group and an arylene group, or a combination of two or more thereof.

In Formula B, as the linear or branched alkylene group, a linear or branched alkylene group having 1 to 20 carbon atoms, 1 to 16 carbon atoms, 1 to 12 carbon atoms, 1 to 8 carbon atoms or 1 to 4 carbon atoms may be exemplified, and as the cyclic alkylene group, a cyclic alkylene group having 3 to 20 carbon atoms, 3 to 16 carbon atoms, 3 to 12 carbon atoms, 3 to 8 carbon atoms or 1 to 6 carbon atoms may be exemplified.

In Formula B, the fact that L is a divalent linking group of any one selected from the group consisting of a linear, branched or cyclic alkylene group and an arylene group, or a combination of two or more thereof means that L is the above-mentioned alkylene group or arylene group, or forms a divalent linking group in combination of two or more selected from them.

In Formula A, the right subscript of the oxygen atom means the number of siloxane linkages formed by one silicon atom in the silica network. For example, when n is 0, Formula A is represented by SiO_{4/2}, which means that one silicon atom is connected to four oxygen atoms to form four siloxane linkages. Since the siloxane linkage is formed by sharing one oxygen atom by two silicon atoms, the right subscript 4/2 of the oxygen atom in Formula means that four oxygen atoms are bonded to one silicon atom and each oxygen atom is boned to another silicon atom. Such a network can be formed, for example, by using a tetrafunctional silane such as tetraalkoxysilane as a raw material in a preparation method to be described below. Similarly, when n is 1, Formula A is represented by RSiO_{3/2}, which means a form that one silicon atom is connected to three oxygen atoms to form three siloxane linkages and R as a functional group is attached to the silicon atom. Such a network can be formed, for example, by using a trifunctional silane such as trialkoxysilane as a raw material in a preparation method to be described below.

Formula B means that one silicon atom is connected to three oxygen atoms, and the three oxygen atoms are each connected to another silicon atom to form three siloxane linkages and simultaneously the silicon atom is connected to another silicon atom via L to form a -Si - L-Si- linkage. Such a network can be formed, for example, by using a compound having a structure in which two trialkoxysilyl groups are connected by a divalent linking group, such as 1,2-bis(triethoxysilane) ethane, as a raw material in a preparation method to be described below.

The silica network of the glass film of the present application may be composed of any one of the units of Formula A or B, or a combination of two or more of the above units. In this case, as the unit of Formula A, any one of the unit in which n is 0 and the unit in which n is 1 may be used, or both of the two units may be used.

The glass film of the present application may comprise the silica network as a main component. The fact that the glass film comprises the silica network as a main component may mean a case where the ratio of the silica network in the glass film is, for example, 55 weight% or more, 60 weight% or more, 65 weight% or more, 70 weight% or more, 75 weight% or more, 80 weight% or more, 85 weight% or more, 90 weight% or more, or 95 weight% or more as a weight ratio. The ratio of the silica network in the glass film may be 100 weight% or less, or less than 100 weight%.

In the present application, the silica network may be formed at a high density so that the silica film may show necessary advantages among advantages of the glass material, and such a silica film may be referred to as a silica glass film.

For example, the silica glass film may exhibit any one or more of physical properties to be described below. Therefore, according to the present application, a film comprising a silica network as a main component while exhibiting one or more of physical properties to be described below may be referred to as a silica glass film.

The physical properties of the silica glass film to be described below may be physical properties of the silica film alone, or physical properties of the silica film in combination with other functional films. The latter case is a result of evaluating the physical properties of the surface of the silica film in a state where the silica film is laminated with other functional films. At this time, the film laminated with the silica film may be exemplified by a polymer film such as a PET (poly(ethylene terephthalate)) film, a glass film or a hard coating film, and the like.

For example, the silica glass film may have 500 g steel wool resistance of 5,000 times or more. Here, the 500 g steel wool resistance is a surface characteristic identified in a steel wool test, where the test is evaluated in the manner described in the following examples. In another example, the 500 g steel wool resistance of the glass film may be approximately 5,500 times or more, 6,000 times or more, 6,500 times or more, 7,000 times or more, 7,500 times or more, 8,000 times or more, 8,500 times or more, 9,000 times or more, or 9,500 times or more. Since it means that the higher the numerical value of the steel wool resistance, the glass film exhibits more excellent scratch resistance, the upper limit thereof is not particularly limited. In one example, the 500 g steel wool resistance may also be 20,000 times or less or so, 15,000 times or less or so, 10,000 times or less or so, 9,000 times or less or so, or 8,500 times or less or so.

For example, the silica glass film may exhibit pencil hardness of 5H or more. The pencil hardness can be measured by a method of drawing a pencil lead on a surface of a glass film with a load of 500 g and an angle of 45 degrees at a temperature of about 25°C and 50% relative humidity using a general pencil hardness measuring instrument. The pencil hardness can be measured by increasing the hardness of the pencil lead stepwise until the occurrence of defects such as indentations, scratches or ruptures on the glass film surface is confirmed. In another example, the pencil hardness of the silica glass film may be approximately 6H or more, 7H or more, 8H or more, or 9H or more.

In addition, the silica glass film may have excellent flexibility. This flexibility is a characteristic that glass materials do not exhibit, but the silica glass film of the present application can exhibit excellent flexibility while exhibiting, for example, the scratch resistance and/or surface hardness as mentioned above. For example, the silica glass film may exhibit a maximum holding curvature radius of 1 to 40 pi or so, alone or in combination with other films. Here, when the silica glass film has been bent according to the Mandrel test in accordance with ASTM D522 standard, the maximum holding curvature radius means a curvature radius at the time of being bent to the maximum without any defects observed on the surface of the silica glass film.

In another example, the curvature radius may be 1.5 pi or more, or may also be 38 pi or less or so, 36 pi or less or so, 34 pi or less or so, 32 pi or less or so, 30 pi or less or so, 28 pi or less or so, 26 pi or less or so, 24 pi or less or so, 22 pi or less or so, 20 pi or less or so, 18 pi or less or so, 16 pi or less or so, 14 pi or less or so, 12 pi or less or so, 10 pi or less or so, 8 pi or less or so, 6 pi or less or so, 4 pi or less or so, or 3 pi or less or so.

The silica glass film may exhibit a water vapor transmission rate (WVTR) in a predetermined range. The water vapor transmission rate may indirectly reflect the density of the silica network and/or the degree of crystallization or whether or not it is crystallized. That is, in one example, when the silica film is formed to the extent to exhibit a water vapor transmission rate in a range to be described below, it may be possible to secure the desired physical properties in the present application. For example, the silica glass film may have a water vapor transmission rate of 1 g/m²/day or more. In another example, the water vapor transmission rate may be 1.5 g/m²/day or more or so, 2 g/m²/day or more or so, 2.5 g/m²/day or more or so, 3 g/m²/day or more or so, or 3.5 g/m²/day or more or so. The upper limit of the water vapor transmission rate of the silica glass film is not particularly limited, but it may also be 20 g/m²/day or less or so, 19.5 g/m²/day or less or so, 19 g/m²/day or less or so, 18.5 g/m²/day or less or so, 18 g/m²/day or less or so, 17.5 g/m²/day or less or so, 17 g/m²/day or less or so, 16.5 g/m²/day or less or so, 16 g/m²/day or less or so, 15.5 g/m²/day or less or so, 15 g/m²/day or less or so, 14.5 g/m²/day or less or so, 14 g/m²/day or less or so, 13.5 g/m²/day or less or so, 13 g/m²/day or less or so, 12.5 g/m²/day or less or so, 12 g/m²/day or less or so, 11.5 g/m²/day or less or so, 11 g/m²/day or less or so, 10.5 g/m²/day or less or so, 10 g/m²/day or less or so, 9.5 g/m²/day or less or so, 9 g/m²/day or less or so, 8.5 g/m²/day or less or so, 8 g/m²/day or less or so, 7.5 g/m²/day or less or so, 7 g/m²/day or less or so, 6.5 g/m²/day or less or so, 6 g/m²/day or less or so, 5.5 g/m²/day or less or so, 5 g/m²/day or less or so, or 4.5 g/m²/day or less or so. The water vapor transmission rate of such a silica film can be measured according to ASTM F1249 standard, and for example, it can be measured in a state where the silica glass film is formed on a polymer film (for example, PET (poly(ethylene terephthalate) film), in which the water vapor transmission rate measured by the same standard (ASTM F1249) is in a level of 3.9 to 4.1 g/m²/day, in a thickness of approximately 1 µm or so.

In another example, the silica glass film may have, in a state where it is formed on a polymer film, which is generally known to be no water vapor barrier property, to a thickness of approximately 1 µm or so, water vapor barrier properties such that the water vapor transmission rate of the polymer film alone is not changed by 10% or more. For example, if the water vapor barrier properties of the polymer film alone are W1 and the water vapor barrier properties of a laminate, in which the silica glass film is formed on the polymer film to a thickness of approximately 1 µm or so, are W2, the absolute value of the value calculated as 100 × (W₂-W₁)/W₁ may be about 10 (%) or less or so. At this time, the polymer film may be exemplified by a PET (poly(ethylene terephthalate)) film or a TAC (triacetyl cellulose) film, having its own water vapor transmission rate in a level of 3.9 to 4,000 g/m²/day.

The inventors have confirmed that if the film formed by the silica network has a level of density and/or a degree of crystallization to a level of crystallization which may exhibit the water vapor transmission rate in the above range, a silica film securing scratch resistance, heating resistance and/or surface hardness which are the advantages of the glass material as described above can be obtained. Therefore, the water vapor transmission rate is one of the important factors such that the silica glass film of the present application can secure the desired physical properties.

The silica glass film may comprise nitrogen atoms together with the silica network.

The inventors have confirmed that in forming a silica film, a silica film having the above-mentioned characteristics can be formed even in a low-temperature process by applying a method known as a so-called sol-gel process, but applying a specific catalyst and if necessary, controlling process conditions. This method is completely different from, for example, the method of applying silazane, which is usually known to form a high-density silica film, or the method of performing gelation at a high temperature, resulting in a different membrane quality.

For example, the silica glass film may comprise nitrogen atoms, which are components derived from the specific catalyst, together with the silica network.

In the case of the silica film formed by a method of applying the silazane in the above-mentioned methods, it comprises the nitrogen atoms derived from silazane, but the relevant nitrogen atoms exist in a form bonded to silicon atoms. That is, the silica film formed by the method applying silazane comprises linkages (Si-N) of silicon atoms and nitrogen atoms. However, the nitrogen atoms in the silica glass film of the present application do not exist in this state, and thus the silica film or the silica network of the present application does not contain the linkage (Si-N) of the silicon atom and the nitrogen atom. On the other hand, the silica film obtained through the high-temperature gelation process does not contain nitrogen atoms as well.

In one example, the nitrogen atoms contained in the silica glass film may be nitrogen atoms contained in a specific amine compound, which is a Lewis base, or derived therefrom. That is, the amine compound is used as a catalyst in a silica glass film formation process to be described below, and thus nitrogen atoms may be contained in this amine compound or derived therefrom.

Here, the fact that the nitrogen atoms have been derived from an amine compound as a catalyst may mean that when the amine compound is modified into another kind of compound while performing a catalytic action, the relevant nitrogen atom is contained in the modified compound.

The amine compound may have a pKa of 8 or less. In another example, the pKa may be 7.5 or less, 7 or less, 6.5 or less, 6 or less, 5.5 or less, 5 or less, 4.5 or less or about 4 or less or so, or may be about 1 or more, 1.5 or more, 2 or more, 2.5 or more, 3 or more or so.

The amine compound may have a boiling point in a range of 80°C to 500°C. In another example, the boiling point may be 90°C or higher, 100°C or higher, 110°C or higher, 120°C or higher, 130°C or higher, 140°C or higher, 150°C or higher, 160°C or higher, 170°C or higher, 180°C or higher, 190°C or higher, 200°C or higher, 210°C or higher, 220°C or higher, 230°C or higher, 240°C or higher, 250°C or higher, 260°C or higher, 270°C or higher, 280°C or higher, 290°C or higher, 300°C or higher, 310°C or higher, 320°C or higher, 330°C or higher, 340°C or higher, or 350°C or higher, or may be 1,000°C or lower, 900°C or lower, 800°C or lower, 700°C or lower, 600°C or lower, 500°C or lower, 400°C or lower, or 300°C or lower or so.

The amine compound may have a flash point of 80°C or higher. In another examples, the flash point may be 90°C or higher, 100°C or higher, 110°C or higher, 120°C or higher, 130°C or higher, 140°C or higher, 150°C or higher, or 155°C or higher, or may be 600°C or lower, 500°C or lower, 300°C or lower, 200°C or lower, 190°C or lower, 180°C or lower, or 170°C or less or so.

The amine compound may have a normal temperature vapor pressure of 10,000 Pa or less. In another examples, the normal temperature vapor pressure may be 9,000Pa or less, 8,000Pa or less, 7,000Pa or less, 6,000Pa or less, 5,000Pa or less, 4,000Pa or less, 3,000Pa or less, 2,000Pa or less, 1,000Pa or less, 900Pa or less, 800Pa or less, 700Pa or less, 600Pa or less, 500Pa or less, 400Pa or less, 300Pa or less, 200Pa or less, 100Pa or less, 90Pa or less, 80Pa or less, 70Pa or less, 60Pa or less, 50Pa or less, 40Pa or less, 30Pa or less, 20Pa or less, 10Pa or less, 9, 8Pa or less, 7Pa or less, 6Pa or less, 5Pa or less, 4Pa or less, 3Pa or less, 2Pa or less, 1Pa or less, 0.9Pa or less, 0.8Pa or less, 0.7Pa or less, 0.6Pa or less, 0.5Pa or less, 0.4Pa or less, 0.3Pa or less, 0.2Pa or less, 0.1Pa or less, 0.09Pa or less, 0.08Pa or less, 0.07Pa or less, 0.06Pa or less, 0.05Pa or less, 0.04Pa or less, 0.03Pa or less, 0.02Pa or less, 0.01Pa or less, 0.009Pa or less, 0.008Pa or less, 0.007Pa or less, 0.006Pa or less, 0.005Pa or less, 0.004Pa or less, or 0.003Pa or less, or may be 0.0001Pa or more, 0.0002Pa or more, 0.0003Pa or more, 0.0004Pa or more, 0.0005Pa or more, 0.0006Pa or more, 0.0007Pa or more, 0.0008Pa or more, 0.0009Pa or more, 0.001Pa or more, 0.0015Pa or more, or 0.002Pa or more or so.

By applying an amine compound having the characteristics as described above, a silica glass film having desired physical properties can be effectively obtained. The amine compound having such physical properties has secondary advantages that it is thermally stable, has a low risk of fire, and has low odor and explosion risk due to low vapor pressure.

The amine compound can be used without particular limitation as long as it has the above-mentioned characteristics.

For example, as the amine compound, a compound represented by any one of the following formulae 2 to 5 can be used.

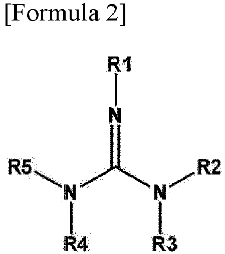

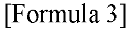

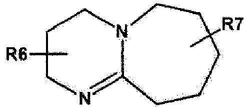

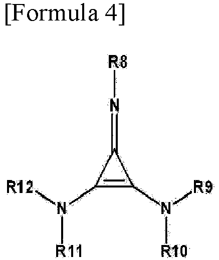

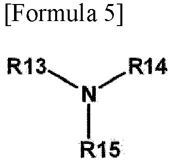

In Formulae 2 to 5, R₁ to R₁₅ may be each independently hydrogen or an alkyl group.

In Formulae 2 to 5, the alkyl group may be a linear, branched or cyclic alkyl group having 1 to 20 carbon atoms, 1 to 16 carbon atoms, 1 to 15 carbon atoms, 1 to 12 carbon atoms, 1 to 8 carbon atoms or 1 to 4 carbon atoms, or having 4 to 20 carbon atoms, 8 to 20 carbon atoms, 4 to 16 carbon atoms, 6 to 16 carbon atoms, 8 to 16 carbon atoms, 4 to 12 carbon atoms, 6 to 12 carbon atoms or 8 to 10 carbon atoms.

The amine compound may also be, for example, a compound of any one of the following formulae 2-1, 3-1, 4-1 and 5-1.

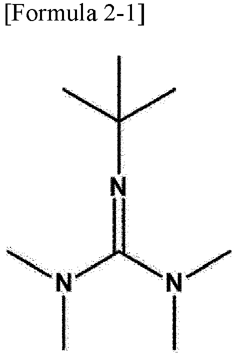

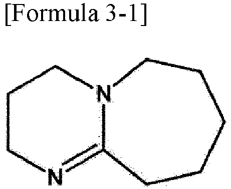

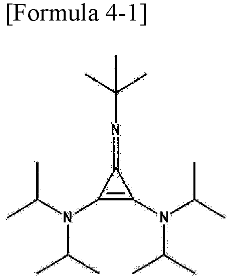

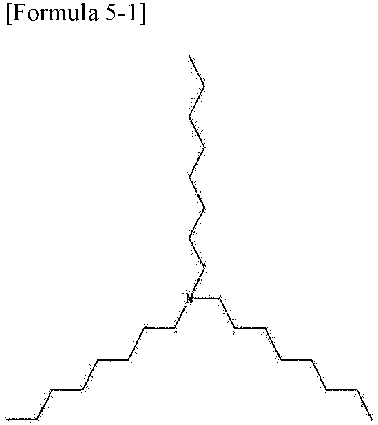

In a suitable example, the amine compound may be a compound wherein in Formula 5, R₁₃ to R₁₅ are alkyl groups. Here, the alkyl group may be a linear, branched or cyclic alkyl group having 1 to 20 carbon atoms, 1 to 16 carbon atoms, 1 to 15 carbon atoms, 1 to 12 carbon atoms, 1 to 8 carbon atoms or 1 to 4 carbon atoms, or having 4 to 20 carbon atoms, 6 to 20 carbon atoms, 8 to 20 carbon atoms, 4 to 16 carbon atoms, 6 to 16 carbon atoms, 8 to 16 carbon atoms, 4 to 12 carbon atoms, 6 to 12 carbon atoms or 8 to 10 carbon atoms.

In another example, the nitrogen atom may be contained in a compound known as a so-called latent base generator, or may be derived therefrom. At this time, the meaning of the derivation is as described above. The term latent base generator means a compound which does not show basicity under a normal environment such as room temperature and normal pressure but exhibits basicity by appropriate heat application or irradiation with light such as ultraviolet rays, or a compound having basicity or a compound which is converted into a catalyst.

For example, the latent base generator may be a compound represented by the following formula 6. The compound represented by the following formula 6 can act as a thermal base generator.

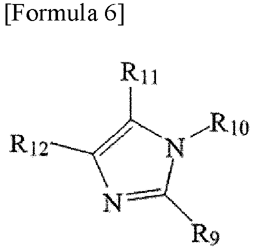

In Formula 6, R₉ may be hydrogen, an alkyl group having 1 to 20 carbon atoms or an aryl group having 6 to 12 carbon atoms, R₁₁ and R₁₂ may be each independently hydrogen or an alkyl group having 1 to 4 carbon atoms, and Rio may be hydrogen, an alkyl group having 1 to 4 carbon atoms, an arylalkyl group having 7 to 16 carbon atoms or a substituent of the following formula 7.

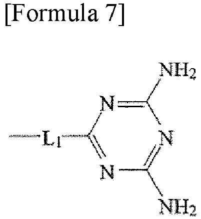

In Formula 7, L₁ may be an alkylene group having 1 to 4 carbon atoms, which may be, for example, a methylene group or an ethylene group, and the like.

In Formula 6, the alkyl group of R₉ may be, in one example, a linear or branched alkyl group having 1 to 20 carbon atoms, 1 to 16 carbon atoms, 1 to 12 carbon atoms, 1 to 8 carbon atoms or 1 to 4 carbon atoms, or may be a linear or branched alkyl group having 1 to 20 carbon atoms, 4 to 20 carbon atoms, 8 to 20 carbon atoms, 12 to 20 carbon atoms or 16 to 20 carbon atoms.

In Formula 6, the aryl group of R₉ may be an aryl group having 6 to 12 carbon atoms or a phenyl group.

In Formula 6, the arylalkyl group of Rio may be an arylalkyl group which contains an alkyl group with 1 to 4 carbon atoms, while having 7 to 16 carbon atoms, which may be, for example, a phenylalkyl group having an alkyl group with 1 to 4 carbon atoms.

Here, the alkyl group, aryl group, arylalkyl group, and the like may be optionally substituted by one or more substituents, and in this case, the substituent may be exemplified by a hydroxyl group, a nitro group or a cyano group, and the like, but is not limited thereto.

In another example, the base generator may be an ionic compound having a cation represented by the following formula 8. The ionic compound having a cation represented by the following formula 8 can act as a photo-base generator.

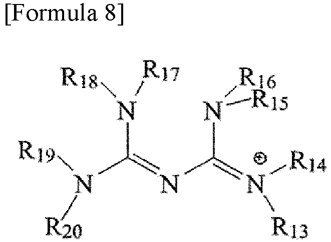

In Formula 8, R₁₃ to R₂₀ may be each independently hydrogen or an alkyl group having 1 to 20 carbon atoms.

The alkyl group may be a linear or branched alkyl group having 1 to 20 carbon atoms, 1 to 16 carbon atoms, 1 to 12 carbon atoms, 1 to 8 carbon atoms or 1 to 4 carbon atoms, which may be, for example, a methyl group, an ethyl group or a branched propyl group, and the like.

In another example, the alkyl group may be a cyclic alkyl group having 3 to 20 carbon atoms, 3 to 16 carbon atoms, 3 to 12 carbon atoms, 3 to 8 carbon atoms or 4 to 8 carbon atoms, which may be, for example, a cyclohexyl group and the like.

The alkyl group of Formula 8 may be optionally substituted by one or more substituents, and in this case, the substituent may be exemplified by a hydroxyl group, a nitro group or a cyano group, and the like, but is not limited thereto.

In one example, the base generator may be an ionic compound having a cation represented by the following formula 9 or 10. The ionic compound having a cation represented by the following formula 9 or 10 can act as a photo-base generator.

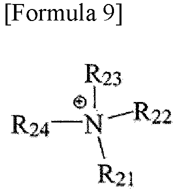

In Formula 9, R₂₁ to R₂₄ may be each independently hydrogen or an alkyl group having 1 to 20 carbon atoms.

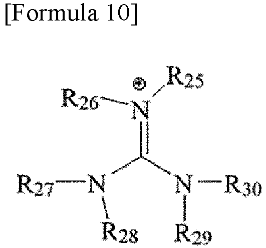

In Formula 10, R₂₅ to R₃₀ may be each independently hydrogen or an alkyl group having 1 to 20 carbon atoms.

In Formula 9 or 10, the alkyl group may be a linear or branched alkyl group having 1 to 20 carbon atoms, 1 to 16 carbon atoms, 1 to 12 carbon atoms, 1 to 8 carbon atoms or 1 to 4 carbon atoms, which may be, for example, a methyl group, an ethyl group or a branched propyl group, and the like.

In another example, the alkyl group in Formula 9 or 10 may be a cyclic alkyl group having 3 to 20 carbon atoms, 3 to 16 carbon atoms, 3 to 12 carbon atoms, 3 to 8 carbon atoms or 4 to 8 carbon atoms, which may be, for example, a cyclohexyl group and the like.

In Formula 9 or 10, the alkyl group may be optionally substituted by one or more substituents, and in this case, the substituent may be exemplified by a hydroxyl group, a nitro group or a cyano group, and the like, but is not limited thereto.

The kind of an anion included in the ionic compound together with the cation such as Formulae 8 to 10 is not particularly limited, and an appropriate kind of anion may be used.

For example, the anion may be an anion represented by the following formula 11 or 12.

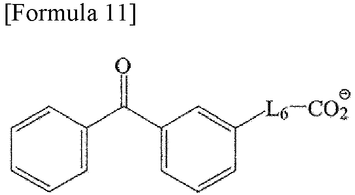

In Formula 11, L₆ may be an alkylene group having 1 to 20 carbon atoms, 1 to 16 carbon atoms, 1 to 12 carbon atoms, 1 to 8 carbon atoms or 1 to 4 carbon atoms, or may be an alkylidene group having the same number of carbon atoms.

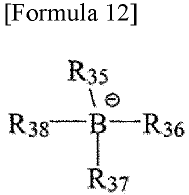

In Formula 12, R₃₅ to R₃₈ may be each independently hydrogen, an alkyl group or an aryl group.

In Formula 12, the alkyl group may be a linear, branched or cyclic alkyl group having 1 to 20 carbon atoms, 1 to 16 carbon atoms, 1 to 12 carbon atoms, 1 to 8 carbon atoms or 1 to 4 carbon atoms.

In Formula 12, the aryl group may be an aryl group having 6 to 30 carbon atoms, 6 to 24 carbon atoms, 6 to 18 carbon atoms or 6 to 12 carbon atoms, or may be a phenyl group.

In one example, the base generator may be a compound represented by the following formula 13. The compound represented by the following formula 13 can act as a photo-base generator.

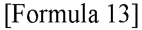

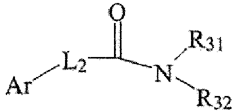

In Formula 13, R₃₁ and R₃₂ may be each independently hydrogen, a linear, branched or cyclic alkyl group. In another example, R₃₁ and R₃₂ may be linked to each other to form a nitrogen-containing heterocyclic structure together with the nitrogen atom to which R₃₁ and R₃₂ are linked.

In Formula 13, Ar may be an aryl group, and L₂ may be -L₃-O- or an alkenylene group having 2 to 4 carbon atoms, where L₃ may be an alkylene group having 1 to 4 carbon atoms or an alkylidene group having 1 to 4 carbon atoms.

In Formula 13, the alkyl group of R₃₁ and R₃₂ may be a linear or branched alkyl group having 1 to 20 carbon atoms, 1 to 16 carbon atoms, 1 to 12 carbon atoms, 1 to 8 carbon atoms or 1 to 4 carbon atoms, which may be, for example, a methyl group, an ethyl group or a branched propyl group, and the like.

In another example, the alkyl group of R₃₁ and R₃₂ in Formula 13 may be a cyclic alkyl group having 3 to 20 carbon atoms, 3 to 16 carbon atoms, 3 to 12 carbon atoms, 3 to 8 carbon atoms or 4 to 8 carbon atoms, which may be, for example, a cyclohexyl group and the like.

In another example, R₃₁ and R₃₂ may be linked to each other to form a nitrogen-containing heterocyclic structure together with the nitrogen atom to which R₃₁ and R₃₂ are linked. The ring structure may be a structure which includes one or more, for example, one or two, nitrogen atoms by including the nitrogen atom to which R₃₁ and R₃₂ are linked and also has 3 to 20, 3 to 16, 3 to 12 or 3 to 8 carbon atoms.

The nitrogen-containing heterocyclic structure can be exemplified by a piperidine structure or an imidazole structure, and the like, but is not limited thereto.

When the nitrogen-containing heterocyclic structure is a piperidine structure, the compound of Formula 13 may be represented by the following formula 13-1; and when it is an imidazole structure, it may be represented by the following formula 13-2.

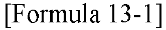

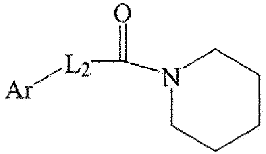

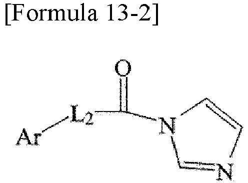

In Formulae 13-1 and 13-2, Ar may be an aryl group, which may be, for example, an aryl group having 6 to 30 carbon atoms, 6 to 30 carbon atoms or 6 to 18 carbon atoms.

An example of the aryl group may be exemplified by a phenyl group, a naphthyl group, an anthryl group or an anthraquinonyl group, and the like, and specifically, may be exemplified by a 9-anthryl group, or an anthroquinon-1-yl group or an anthroquinon-2-yl group, and the like, but is not limited thereto.

In Formulae 13-1 and 13-2, L₂ may be -L₃-O- or an alkenylene group having 2 to 4 carbon atoms. Here, in the case of -L₃-O-, a structure that L₃ is linked to Ar and O is linked to the carbon atom of the carbonyl group of Formulae 13-1 and 13-2, or a structure that O is linked to Ar and L₃ is linked to the carbon atom of the carbonyl group of Formula 8 can be derived.

L₃ may be an alkylene group having 1 to 4 carbon atoms or an alkylidene group having 1 to 4 carbon atoms.

The alkyl group, the nitrogen-containing heterocyclic structure, the aryl group, the alkenyl group, the alkylene group and/or the alkylidene group of Formulae 13, 13-1 and 13-2 may be optionally substituted by one or more substituents, and the example thereof may be exemplified by a halogen atom, a hydroxyl group, a cyano group, a nitro group, an acryloyl group, a methacryloyl group, an acryloyloxy group and/or a methacryloyloxy group, and the like, but is not limited thereto.

As the latent base generator, a compound having the above-described structure synthesized by a known substance synthesis method or a product known in the art can be obtained and used. Such a product includes WPBG series from WAKO or Curezol products from Shikoku Chemical, but is not limited thereto.

In the present application, the ratio of the nitrogen atoms contained in the silica film is not particularly limited. That is, as already described, the nitrogen atoms may be derived from the material used as the catalyst in the production process, and in this case, the ratio of nitrogen atoms may be determined according to the amount of the used catalyst.

In one example, the ratio of the nitrogen atoms contained in the silica film may be in a range of 0.0001 to 6 weight%. The ratio may be about 0.0005 weight% or more or so, 0.001 weight% or more or so, 0.005 weight% or more or so, 0.1 weight% or more or so, 0.15 weight% or more or so, 0. weight% or more or so, 0.25 weight% or more or so, 0.3 weight% or more or so, 0.35 weight% or more or so, 0.4 weight% or more or so, 0.45 weight% or more or so, 0.5 weight% or more or so, 0.55 weight% or more or so, or 0.6 weight% or more or so, or may also be 5.8 weight% or less or so, 5 weight% or less or so, 6 weight% or less or so, 5.4 weight% or less or so, 5.2 weight% or less or so, 5 weight% or less or so, 4.8 weight% or less or so, 4.6 weight% or less or so, 4.4 weight% or less or so, 4.2 weight% or less or so, 4 weight% or less or so, 3.8 weight% or less or so, 3.6 weight% or less or so, 3.4 weight% or less or so, 3.2 weight% or less or so, 3 weight% or less or so, 2.8 weight% or less or so, 2.6 weight% or less or so, 2.4 weight% or less or so, 2.2 weight% or less or so, 2.0 weight% or less or so, 1.8 weight% or less or so, 1.6 weight% or less or so, 1.4 weight% or less or so, 1.2 weight% or less or so, 1 weight% or less or so, 0.8 weight% or less or so, 0.6 weight% or less or so, 0.4% or less or so, 0.2 weight% or less or so, 0.1 weight% or less or so, 0.08 weight% or less or so, 0.06 weight% or less or so, 0.04 weight% or less or so, 0.02 weight% or less or so, 0.01 weight% or less or so, 0.008 weight% or less or so, or 0.006 weight% or less or so.

The ratio of nitrogen atoms as mentioned above may be a ratio of nitrogen or phosphorus atoms derived from the above-mentioned catalyst.

The silica glass film may also comprise any other component in addition to the silica network and the nitrogen atoms. An example of such a component may be exemplified by nanoparticles such as silica, ceria or titania, fluorine-based or silicon-based slip agents and/or drying retarders, and the like, but is not limited thereto. These additives may be optionally added in consideration of the purpose, and the specific kinds and ratios thereof may be adjusted depending on the purpose.

Such a silica glass film may have an appropriate thickness depending on the intended physical properties. For example, the thickness of the silica film may be in a range of approximately 0.5µm to 20µm. In another example, the thickness may be 1µm or more, 2µm or more, 3µm or more, 4µm or more, 5µm or more, 6µm or more, 7µm or more, 8µm or more, 9µm or more, or 10µm or more, or may be 19µm or less, 18µm or less, 17µm or less, 16µm or less, 15µm or less, 14µm or less, 13µm or less, 12µm or less, or 11µm or less.

A silica glass film may be produced by a method to be described below. The silica glass film may be produced using a silica precursor layer formed of a silica precursor composition comprising a silica precursor and an acid catalyst.

The silica precursor layer may or may not comprise a latent base generator, i.e., a compound of the above-described chemical structure, as an additional component. When the latent base generator is included, the base may be generated by applying appropriate heat to the silica precursor, or irradiating it with light and gelation may proceed to form a silica glass film, and when the latent base generator is not included, it may comprise a step of contacting the silica precursor layer with a Lewis base. At this time, the above-described amine compound may be used as the Lewis base.

In the present application, the term silica precursor composition is a raw material of a so-called sol-gel method or an intermediate product during processing the sol-gel method, which may mean a composition comprising a silica sol as a condensate of a silane compound. Thus, the silica precursor may be a composition comprising a silica precursor, and the silica precursor may mean a silane compound, which is the applied raw material, and/or a silica sol formed by condensation of the silane compound.

The silica precursor composition of the present application may be a composition obtained by treating a composition comprising a silane compound as a raw material with an acid catalyst. Thus, the silica precursor composition may have a pH of at least 5 or less. When the condensation reaction of the raw material is performed using a catalyst so as to have a pH in the above-mentioned range, it is advantageous to form a silica film having desired physical properties in a subsequent process. In another example, the pH may be 4.5 or less, 4 or less, or 3.5 or less or so, or may be 0 or more, more than 0, 0.5 or more, or about 1 or more or so.

The silica precursor may comprise a silane compound as a raw material, a hydrolysate of the silane compound and/or a condensation reaction product of the silane compound.

At this time, as the silane compound which is a raw material, for example, a compound of the following formula D or E may be used.

[Formula D] SiR¹₍₄₋ₙ₎(OR²)ₙ

In Formula D, R¹ is the same as the definition for R in Formula A, R² may be an alkyl group having 1 to 4 carbon atoms, an aryl group having 6 to 12 carbon atoms or a hydrogen atom, and the like, and n is 3 or 4. Here, the alkyl group may be a linear or branched alkyl group having 1 to 4 carbon atoms, and may also be optionally substituted with one or more substituents. The alkyl group may be, for example, a methyl group or an ethyl group.

The alkyl group, alkoxy group or aryl group may be optionally substituted, and in this case, the substituent includes a glycidyl group, a halogen atom, an alicyclic epoxy group, an acryloyl group, a methacryloyl group, an acryloyloxy group or methacryloyloxy grou, and the like, but is not limited thereto.

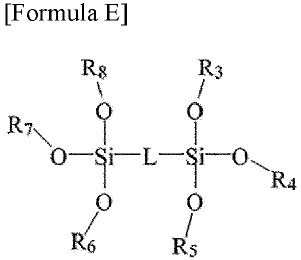

In Formula E, L is the same as L in Formula B as described above. In one example, L may be an alkylene group having 1 to 4 carbon atoms, or may be a divalent linking group of Formula C above. In Formula D, R₃ to R₈ are each independently an alkyl group having 1 to 4 carbon atoms, an alkoxy group having 1 to 4 carbon atoms, an aryl group having 6 to 12 carbon atoms or a hydrogen atom. Here, the alkylene group may be a linear or branched alkylene group having 1 to 4 carbon atoms, and may also be optionally substituted with one or more substituents. The alkylene group may be, for example, a methylene group or an ethylene group. Also, in Formula E, the alkyl group may be a linear or branched alkyl group having 1 to 4 carbon atoms, and may also be optionally substituted with one or more substituents. The alkyl group may be, for example, a methyl group or an ethyl group. Here, the alkoxy may be a linear or branched alkoxy group having 1 to 4 carbon atoms, and may also be optionally substituted with one or more substituents. The alkoxy may be, for example, a methoxy group or an ethoxy group. Here, the aryl group may be an aryl group having 6 to 12 carbon atoms or a phenyl group, and the like.

The silica precursor composition may comprise the aforementioned silica precursor (i.e., the silane compound as the raw material, its hydrolyzate and/or its condensate, and the like), for example, in a range of about 5 to 60 weight%. In another example, the ratio may be about 6 weight% or more, 7 weight% or more, 8 weight% or more, 9 weight% or more, 10 weight% or more, 11 weight% or more, 12 weight% or more, 13 weight% or more, 14 weight% or more, 15 weight% or more, 16 weight% or more, 17 weight% or more, 18 weight% or more, 19 weight% or more, 20 weight% or more, 21 weight% or more, 22 weight% or more, 23% or more, 24 weight% or more, 25 weight% or more, 26 weight% or more, 27 weight% or more, 28 weight% or more, 29 weight% or more, 30 weight% or more, 31 weight% or more, 32 weight% or more, 33 weight% or more, 34 weight% or more, 35 weight% or more, 36 weight% or more, 37 weight% or more, 38 weight% or more, or 39 weight% or more, or may also be about 59 weight% or less, 58 weight% or less, 57 weight% or less, 56 weight% or less, 55 weight% or less, 54 weight% or less, 53 weight% or less, 52 weight% or less, 51 weight% or less, 50 weight% or less, 49 weight% or less, 48 weight% or less, 47 weight% or less, 46 weight% or less, 45 weight% or less, 44 weight% or less, 43 weight% or less, 42 weight% or less, 41 weight% or less, 40 weight% or less, 39 weight% or less, 38 weight% or less, 37 weight% or less, 36 weight% or less, 35 weight% or less, 34 weight% or less, 33 weight% or less, 32 weight% or less, 31 weight% or less, 30 weight% or less, 29 weight% or less, 28 weight% or less, 27 weight% or less, 26 weight% or less, 25 weight% or less, 24 weight% or less, 23 weight% or less, 22 weight% or less, 21 weight% or less, 20 weight% or less, 19 weight% or less, 18 weight% or less, 17 weight% or less, 16 weight% or less, or 15 weight% or less or so.

In one example, the ratio of the silica precursor may be a percentage value obtained by calculating the amount of the solid content to be confirmed after drying and dewatering processes with respect to the silica precursor composition in relation to the amount of the composition before the drying and dewatering. In one example, the drying process may proceed at about 80°C for about 1 hour or so, and the dewatering process may proceed at about 200°C for about 24 hours. In another example, the ratio of the silica precursor may also be the amount of the silane compound applied to the preparation of the silica precursor composition.

Hereinafter, in defining the ratio between the components of the silica precursor composition herein, the ratio or weight of the used silica precursor may be based on the ratio or weight of the remaining components after the drying and dewatering processes, or may be the amount of the silane compound applied to the preparation of the silica precursor composition.

The silica precursor composition secured by performing solation to a level that such a content can be secured has advantageous processability and handling properties by exhibiting an appropriate viscosity, minimizes a drying time in the process of forming a silica glass film, is free from stains and the like, and is advantageous to obtain a target product having excellent physical properties such as a uniform thickness.

The method of maintaining the content of the silica precursor within the above-mentioned range is not particularly limited, and the content can be achieved by controlling the kind of the applied catalyst or the process time in the solation process, and other process conditions.

The silica precursor composition may be a composition derived using an acid catalyst. For example, the silica precursor composition can be formed by bringing the silane compound into contact with an appropriate acid catalyst to perform the solation. The kind of the acid catalyst to be applied in the above process and the ratio thereof are not particularly limited and those which can induce a suitable condensation reaction and can secure the pH in the above-mentioned range can be used.

The acid catalyst may be exemplified by one or a mixture of two or more selected from hydrochloric acid, sulfuric acid, fluorosulfuric acid, nitric acid, phosphoric acid, acetic acid, hexafluorophosphoric acid, p-toluenesulfonic acid and trifluoromethanesulfonic acid, and the like, but is not limited thereto.

The amount of the acid catalyst used to form the silica precursor composition is not particularly limited, which may be controlled such that the pH in the above-described range is secured and, if necessary, a silica sol precursor content to be described below can be secured.

In one example, the acid catalyst may be used such that the silica precursor composition comprises 0.01 to 50 parts by weight of the acid catalyst relative to 100 parts by weight of the silica precursor. In another example, the ratio may be 0.03 parts by weight or more, 0.1 parts by weight or more, 0.5 parts by weight or more, 1 part by weight or more, 5 parts by weight or more, 10 parts by weight or more, 15 parts by weight or more, 20 parts by weight or more, or 25 parts by weight or more, or may also be 45 parts by weight or less, 40 parts by weight or less, 35 parts by weight or less, 30 parts by weight or less, 25 parts by weight or less, 20 parts by weight or less, 15 parts by weight or less, 10 parts by weight or less, 5 parts by weight or less, or 3 parts by weight or less or so.

The silica precursor composition may further comprise optional components in addition to the above components. For example, the silica precursor composition may further comprise a solvent.

As the solvent, for example, a solvent having a boiling point in a range of about 50°C to 150°C may be used. Such a solvent may be exemplified by an aqueous solvent such as water or an organic solvent, where the organic solvent may be exemplified by an alcohol, ketone or acetate solvent, and the like. An example of the applicable alcohol solvent may be exemplified by ethyl alcohol, n-propyl alcohol, i-propyl alcohol, i-butyl alcohol, n-butyl alcohol and/or t-butyl alcohol, and the like; the ketone solvent may be exemplified by acetone, methyl ethyl ketone, methyl isobutyl ketone, dimethyl ketone, methyl isopropyl ketone and/or acetyl acetone, and the like; and the acetate solvent may be exemplified by methyl acetate, ethyl acetate, propyl acetate and/or butyl acetate, without being limited thereto.

In one example, the composition may comprise a mixed solvent of the aqueous solvent and the organic solvent, where water is used as the aqueous solvent, and the alcohol, ketone and/or acetate solvent as described above may be used as the organic solvent, without being limited thereto.

The amount of the solvent in the silica precursor composition is not particularly limited, but for example, a solvent having the number of moles about 2 times to 8 times the number of moles of the silane compound used as the raw material may be used.

In one example, the silica precursor composition may comprise a solvent in an amount of 40 to 2,000 parts by weight relative to 100 parts by weight of the silica precursor. In another example, the ratio may be 45 parts by weight or more, 50 parts by weight or more, 55 parts by weight or more, 60 parts by weight or more, 65 parts by weight or more, 70 parts by weight or more, 75 parts by weight or more, 80 parts by weight or more, 85 parts by weight or more, 90 parts by weight or more or so, 95 parts by weight or more or so, 100 parts by weight or more or so, 150 parts by weight or more or so, 200 parts by weight or more or so, 250 parts by weight or more or so, 300 parts by weight or more or so, 350 parts by weight or more or so, 400 parts by weight or more or so, 450 parts by weight or more or so, 500 parts by weight or more or so, 550 parts by weight or more or so, 600 parts by weight or more or so, 650 parts by weight or more or so, 700 parts by weight or more or so, or 750 parts by weight or more or so, or may also be 1,800 parts by weight or less, 1,600 parts by weight or less, 1,400 parts by weight or less, or 1,300 parts by weight or less or so.

When a mixture of an aqueous solvent and an organic solvent is applied as the solvent, the aqueous solvent may be used in an amount of about 5 to 200 parts by weight or so relative to 100 parts by weight of the organic solvent, but is not limited thereto. In another example, the ratio may be about 10 parts by weight or more, 15 parts by weight or more, 20 parts by weight or more, 25 parts by weight or more or 30 parts by weight or more, 35 parts by weight or more or so, 40 parts by weight or more or so, 45 parts by weight or more or so, 50 parts by weight or more or so, 55 parts by weight or more or so, 60 parts by weight or more or so, 65 parts by weight or more or so, 70 parts by weight or more or so, 75 parts by weight or more or so, 80 parts by weight or more or so, 85 parts by weight or more or so, 90 parts by weight or more or so, or 95 parts by weight or more or so, or may also be about 180 parts by weight or less or so, 160 parts by weight or less or so, 140 parts by weight or less or so, 120 parts by weight or less or so, or about 110 parts by weight or less or so.

As already described, the silica precursor composition may also comprise the above-described latent base generator. In this case, the specific type of the latent base generators that can be included is as described above.

When the latent base generator is included, the ratio may be included in a ratio of about 0.01 to 50 parts by weight or so relative to 100 parts by weight of the silica precursor. In another example, the ratio of the latent base generator may be approximately 0.05 parts by weight or more, 0.1 parts by weight or more, 0.5 parts by weight or more, 1 part by weight or more, 1.5 parts by weight or more, 2 parts by weight or more, 2.5 parts by weight or more, 3 parts by weight or more, or 3.5 parts by weight or more, or may also be 45 parts by weight or less, 40 parts by weight or less, 35 parts by weight or less, 30 parts by weight or less, 25 parts by weight or less, 20 parts by weight or less, 15 parts by weight or less, 10 parts by weight or less, or 5 parts by weight or less or so.

The silica precursor composition may comprise various additives, if necessary, in addition to the above-mentioned components, and examples thereof may include the same components as those exemplified as optional components of the silica glass film.

However, in the case where the silica precursor composition does not contain the latent base generator and accordingly, a contact process with a Lewis base to be described below is performed, the silica precursor composition may comprise only the above-mentioned acid catalyst as the catalyst and may not comprise other base catalysts. That is, the precursor layer in contact with the Lewis base may comprise only the above-mentioned acid catalyst as the catalyst and may not comprise any base catalyst.

The silica precursor composition may be prepared, for example, by contacting the silane compound with an acid catalyst. In one example, the composition may be prepared by mixing the solvent and the silane compound to prepare a silica precursor dispersion liquid and then adding an acid catalyst to the dispersion liquid. In addition, if necessary, the above-mentioned latent base generator may be further compounded at an appropriate time.

Here, the types of the applied silane compound, solvent and acid catalyst, and the like are the same as described above, and their ratios can also be adjusted according to the above-mentioned ranges. Here, the addition of the acid catalyst and/or the latent base generator may also be performed by adding only the acid catalyst and/or the latent base generator itself to the dispersion liquid or by a method of mixing the acid catalyst and/or the latent base generator with a suitable solvent and then adding the mixture.

The step of forming the silica precursor composition may be performed so that the composition has a pH of 5 or less, as described above.

The step of forming the silica precursor composition through contact between the silane compound and the acid catalyst as described above may be performed at a temperature of 80°C or lower. For example, the contacting step with the acid catalyst may be performed at a temperature of approximately room temperature to 80°C or lower.

When the latent base generator is not included, the step of contacting the silica precursor layer formed from the silica precursor composition formed in the above manner with the amine compound, which is the above-mentioned Lewis base, is performed. Here, the silica precursor layer may be the above-described silica precursor composition itself or an object formed through a predetermined treatment therefrom. For example, the silica precursor layer may be one that the solvent is removed by drying the silica precursor composition to an appropriate level.

This silica precursor layer may be in a state molded in various forms, for example, may be molded in a film form. In one example, the silica precursor layer may be formed by applying the silica precursor composition on a suitable base material and drying it. By the drying, the solvent included in the composition may be removed to an appropriate level. The application may be performed by a suitable coating technique, and for example, bar coating, comma coating, lip coating, spin coating, dip coating and/or gravure coating methods and the like may be applied. The application thickness upon this application may be selected in consideration of the level of the desired silica film. In the drying step, the conditions can be controlled so that the solvent can be removed to the desired level. According to one example, the drying step may be performed at a temperature of approximately 120°C or lower. In another example, the drying temperature may be performed at approximately 50°C or higher, 55°C or higher, 60°C or higher, 65°C or higher, 70°C or higher, or 75°C or higher, or may also be performed at about 110°C or lower, 100°C or lower, 90°C or lower, or 85°C or lower or so. In addition, the drying time can be adjusted in a range of approximately 30 seconds to 1 hour, and the time may also be 55 minutes or less, 50 minutes or less, 45 minutes or less, 40 minutes or less, 35 minutes or less, 30 minutes or less, 25 minutes or less, 20 minutes or less, 15 minutes or less, 10 minutes or less, 5 minutes or less, or 3 minutes or less or so.

After forming the silica precursor layer in such a manner, any treatment may be performed before contacting it with the Lewis base. An example of this treatment may be exemplified by a surface modification step or the like through plasma or corona treatment, and the like, but is not limited thereto. A specific manner of performing the plasma treatment and the corona treatment is not particularly limited, which may be performed, for example, by a known method such as a direct method or an indirect method using atmospheric pressure plasma. Such surface treatment can further improve the physical properties of the silica film by increasing the contact efficiency in the contact step with the Lewis base and improving the base catalyst treatment effect.

Here, the type of base materials to which the silica precursor composition is applied is not particularly limited, and for example, the base material may also be a releasing process film in which a silica film is removed therefrom after the formation of the silica film, or a base material used together with the silica film, for example, a functional organic film to be described below. For example, when the silica glass film is applied to a component of an electronic element, the base material may be a component provided with the silica glass film.

In the present application, since all the processes can be performed in a low temperature process, the base material has a high degree of application freedom, and for example, a polymer base material known to be unsuitable in a high temperature process may also be used. An example of such a base material can be exemplified by a film or the like in which a film of PET (polyethylene terephthalate), PEN (polyethylene naphthalate), PEEK (polyether ether ketone) and PI (polyimide), and the like is in the form of a single layer or a multilayer, but is not limited thereto.

In addition, as the polymer film, for example, a TAC (triacetyl cellulose) film; a COP (cycloolefin copolymer) film such as norbornene derivatives; an acrylic film such as PMMA (poly(methyl methacrylate); a PC (polycarbonate) film; a PE (polyethylene) film; a PP (polypropylene) film; a PVA (polyvinyl alcohol) film; a DAC (diacetyl cellulose) film; a Pac (polyacrylate) film; a PES (polyether sulfone) film; a PEEK (polyetheretherketone) film; a PPS (polyphenylsulfone) film; a PEI (polyetherimide) film; a PEN (polyethylenenaphthalate) film; a PET (polyethyleneterephtalate) film; a PI (polyimide) film; a PSF (polysulfone) film; a PAR (polyarylate) film or a fluororesin film can also be applied.

If necessary, the base material may also be subjected to suitable surface treatment.

The base material may also be an appropriate functional film, for example, an optical functional film such as a retardation film, a polarizing film, a luminance enhancement film, or a high refractive index or low refractive index film, if necessary.

When the latent base generator is not included, a silica precursor layer formed through the above steps may be contacted with an amine compound, which is a Lewis base, to form a silica film. The term Lewis base means a material capable of imparting a non-covalent electron pair, as is known.

In the present application, a silica film having desired physical properties even at a low temperature can be formed by contacting the above-mentioned specific silica precursor composition with a Lewis base to be subjected to gelation and forming a silica glass film.

The method of contacting the silica precursor layer with the Lewis base is not particularly limited. For example, a method of immersing the silica precursor layer in the Lewis base, or coating, spraying and/or dropping the Lewis base on the silica precursor layer, and the like can be applied.

As the Lewis base, an amine compound having the pKa, boiling point, flash point and/or normal temperature vapor pressure as described above may be used.

Such an amine compound may be in a liquid phase at a temperature of 120°C or 120°C or lower. That is, the amine compound may also be applied as itself or may be mixed with an aqueous solvent, such as water, or an organic solvent, and the like and applied. For example, when the compound is in a solid phase at a temperature of 120°C or lower, it can be dissolved in an aqueous or organic solvent and used. Here, the usable organic solvent may be exemplified by one or more of N,N-dimethylacetamide (DMAc), N-methylpyrrolidone (NMP), N,N-dimethylformamide (DMF), 1,3-dimethyl-2-imidazolidinone, N,N-diethylacetamide (DEAc), N,N-dimethylmethoxyacetamide, dimethylsulfoxide, pyridine, dimethylsulfone, hexamethylphosphoramide, tetramethylurea, N-methylcaprolactam, tetrahydrofurane, m-dioxane, p-dioxane, 1,2-dimethoxyethane, bis(2-methoxyethyl)ether, 1,2-bis(2-(methoxyethoxy)ethane, bis[2-(2-methoxyethoxy)]ether, poly(ethylene glycol) methacrylate (PEGMA), gamma-butyrolactone (GBL), and equamide (Equamide M100, Idemitsu Kosan Co., Ltd), but is not limited thereto.

As described above, the Lewis base is brought into contact with the above-mentioned specific silica precursor composition to perform gelation, whereby the silica glass film having desired physical properties can be effectively obtained.

That is, the gelation or curing reaction of the silica precursor layer can be induced by the contact with the Lewis base.

Such gelation or curing can proceed even at a low temperature condition and can proceed effectively without any special treatment to form a silica film having desired physical properties. In one example, the gelation or curing reaction, that is, the contact with the Lewis base, can be performed at a low temperature, for example at about 120°C or less or so. In one example, the contact may also be performed at 110°C or lower, 100°C or lower, 90°C or lower, or 85°C or lower and may also be performed at 60°C or higher, 65°C or higher, 70°C or higher, or 75°C or higher or so.

When the latent base generator is included, the silica precursor may be applied by heat or irradiated with light, without the contact process, to generate a base, thereby performing the gelation or curing and forming a silica glass film.

That is, when the latent base generator is included, the step of activating the base generator may be performed. The activation step is collectively referred to as a step of converting the relevant generator to a basic compound or a catalyst, or producing the compound or catalyst.

The specific conditions of the activation step of the base generator may be adjusted in consideration of the kind of the used base generator. For example, when the thermal base generator is applied, the activation step may be performed by applying heat so that the silica film is maintained at a temperature within the range of about 50°C to 250°C, a temperature within the range of about 50°C to 200°C or a temperature within the range of about 50°C to 150°C, and when the photo-base generator is applied, it may be performed by irradiating the silica film with light having a wavelength of approximately 300nm to 450nm. Here, the heat application can be performed, for example, for a time in a range of approximately 1 minute to 1 hour, and the light irradiation can be performed at an intensity of approximately 200mJ/cm² to 3J/cm².

In the present application, the silica film can be formed in the same manner as above. In the present application, after forming the silica film in this manner, another additional process such as an optional cleaning process may also be performed.

In the method of the present application, all processes can proceed to low-temperature processes. That is, all processes of the present application can be performed under a temperature of the low-temperature process to be described below. In the present application, the term low-temperature process means a process having a process temperature of about 350°C or lower, about 300°C or lower, about 250°C or lower, about 200°C or lower, about 150°C or lower, or about 120°C or lower. In the production process of the silica glass film of the present application, all the processes can be performed in the above temperature range.

In the present application, since a silica glass film having desired physical properties, for example, a high-density and high-hardness silica film can be effectively formed even by the low-temperature process as described above, for example, a large amount of silica films having desired physical properties can be formed by a continuous and inexpensive process, and the silica film can also be effectively formed directly even on a base material which is weak against heat, such as a polymer film. The lower limit of the process temperature in the low-temperature process is not particularly limited, and for example, the low-temperature process may be performed at about 10°C or higher, 15°C or higher, 20°C or higher, or 25°C or higher.

The present application also relates to a laminate comprising the silica glass film. The laminate may comprise, for example, the silica glass film and an organic film in contact with the relevant glass film. Here, the silica glass film may be formed directly on the organic film, and therefore, any kind of layer may not exist between the silica glass film and the organic film. At this time, the type of the applied organic film is not particularly limited, which may be, for example, a cured resin layer or the like known as a so-called hard coating layer, or a polymer film or the like.

There is no particular limitation on the type of polymer film that can be applied, and for example, a TAC (triacetyl cellulose) film; a COP (cycloolefin copolymer) films such as norbornene derivatives; an acrylic film such as PMMA (poly(methyl methacrylate); a PC (polycarbonate) film; a PE (polyethylene) film; a PP (polypropylene) film; a PVA (polyvinyl alcohol) film; a DAC (diacetyl cellulose) film; a Pac (polyacrylate) film,; a PES (polyether sulfone) film; a PEEK (polyetheretherketon) film; a PPS (polyphenylsulfone) film, a PEI (polyetherimide) film; a PEN (polyethylene naphthatate) film; a PET (polyethylene terephtalate) film; a PI (polyimide) film; a PEI (poly(etherimide)) film, a PSF (polysulfone) film; a PAR (polyarylate) film or a fluororesin film, and the like may be used, without being limited thereto.

The organic film may also be a suitable functional film, for example, a functional film such as a retardation film, a polarizing film, a luminance enhancement film, or a high refractive index or low refractive film or a hard coating film, as necessary.

### Advantageous Effects

The present application can provide, as a film having a silica network as a main component, a silica glass film capable of solving the disadvantages of the glass material, while having at least one or more advantages of the glass material. Such a silica glass film of the present application can be easily formed through a simple low temperature process without using expensive equipment.

### Mode for Invention

Hereinafter, the scope of the present application will be described in more detail with reference to examples, but the scope of the present application is not limited by the following examples.

### 1. 500 g steel wool resistance evaluation

For the silica glass film in each of the following examples, the steel wool resistance was evaluated after the glass film was formed on a 1.1 mm glass plate to a thickness of about 1 to 3µm in the same manner as described in each example. As the steel wool, a steel wool of grade #0000 sold by Briwax of Europe was used. The steel wool was contacted with the silica glass film under a load of 500 g using an instrument (manufacturer: KIPAE ENT, trade name: KM-M4360), and the steel wool resistance was evaluated while moving it left and right. At this time, the contact area was set so that the width and length were approximately 2 cm and 2 cm or so, respectively (contact area: 2 cm²). The movement was performed at a speed of about 60 times/min and the moving distance was approximately 10 cm. The steel wool test was performed until reflexes were observed by visual observation and indentations, scratches or ruptures, and the like were identified.

### 2. Pencil hardness evaluation

For the silica glass film in each of the following examples, the pencil hardness was evaluated after the glass film was formed on a 1.1 mm glass plate to a thickness of approximately 1 to 3µm in the same manner as described in each example. While the glass film surface was drawn with a cylindrical pencil lead at a load of 500 g and an angle of 45 degrees using a pencil hardness measuring instrument (manufacturer: Chungbuk Tech, trade name: Pencil Hardness Tester), the hardness of the pencil lead was increased in steps until the occurrence of defects such as indentations, scratches or ruptures was confirmed. Here, the speed of the pencil lead was about 1 mm/sec, and the moving distance was about 10 mm. This test was performed at a temperature of about 25°C and 50% relative humidity.

### 4. Maximum holding curvature radius evaluation

The maximum holding curvature radius was evaluated by the Mandrel flexure evaluation method according to ASTM D522 standard. The evaluation was performed after the silica glass film was formed on a PET (poly(ethylene terephthalate)) film having a thickness of 50µm to a thickness of approximately 1 µm in the same manner as described in each of the following examples.

### 5. Water vapor transmission rate (WVTR) evaluation

The water vapor transmission rate was evaluated according to ASTM F1249 standard. It was evaluated after the silica glass film was formed on a PET (poly(ethylene terephthalate)) film having a thickness of 50µm to a thickness of about 1 µm in the same manner as described in each of the following examples. Here, the applied PET film has a water vapor transmission rate of approximately 3.9 to 4.1g/m²/day when equally measured according to ASTM F1249 standard.

### 6. Method of measuring nitrogen atom ratio

Such a ratio of nitrogen or phosphorus atoms in a silica glass film can be measured by X-ray photoelectron spectroscopy (XPS). The method is based on a photoelectric effect and performs the analysis by measuring the kinetic energy of electrons emitted by the photoelectric effect due to the interaction of a surface with high energy light. The binding energy can be measured by emitting core electrons of an element of an analytical sample using X-rays as a light source, and measuring kinetic energy of the emitted electrons. The elements constituting the sample can be identified by analyzing the measured binding energy, and information on the chemical bonding state and the like can be obtained through chemical shift. In the present application, after a silica glass film is formed on a silicon wafer to a thickness of about 0.5 to 3µm or so, the ratio of nitrogen or phosphorus atoms can be measured in the manner described in each example or the like. In this case, the specific kind of the applied measuring equipment is not particularly limited as long as it is capable of the measurement of the photoelectron spectroscopy.

### Example 1.

TEOS (tetraethoxy silane), ethanol (EtOH), water (H₂O) and hydrochloric acid (HCl) were mixed in a weight ratio of 1:4:4:0.2 (TEOS: EtOH: H₂O: HCl) and stirred at room temperature (25°C) for 3 days or so to form a silica precursor composition. The silica precursor composition was applied to a glass substrate by a bar coating method and dried at 80°C for 1 minute or so. After drying, the layer of the silica precursor composition was subjected to atmospheric plasma treatment and then immersed in trioctylamine (TOA) (pKa: 3.5, boiling point: about 366°C, flash point: about 163°C, room temperature vapor pressure: about 0.002 Pa), which was maintained at a temperature of 80°C or so, for approximately 5 minutes or so to form a silica glass film. The formed silica glass film was washed with running water at 60°C or so for 2 minutes or so and dried in an oven at 80°C or so for 1 minute. In the produced glass film, the 500 g steel wool resistance was 7,000 times or so, the pencil hardness was 9H or so, the nitrogen atom amount contained inside was 0.005 weight% or so, the maximum holding curvature radius was 2 pi or so, and the water vapor transmission rate (WVTR) was 3.9 to 4.0 g/m²/day or so.

### Example 2.

TEOS (tetraethoxy silane), ethanol (EtOH), water (H₂O) and hydrochloric acid (HCl) were mixed in a weight ratio of 1:4:4:0.01 (TEOS: EtOH: H₂O: HCl) and stirred at 65°C for 1 hour or so to form a silica precursor composition. The silica precursor composition was applied to a glass substrate by a bar coating method and dried at 80°C for 1 minute or so. After drying, the layer of the silica precursor composition was subjected to atmospheric plasma treatment and then immersed in trioctylamine (TOA) (pKa: 3.5, boiling point: about 366°C, flash point: about 163°C, room temperature vapor pressure: about 0.002 Pa), which was maintained at a temperature of 80°C or so, for approximately 5 minutes or so to form a silica glass film. The formed silica glass film was washed with running water at 60°C or so for 2 minutes or so and dried in an oven at 80°C or so for 1 minute. In the produced glass film, the 500 g steel wool resistance was 7,000 times or so, the pencil hardness was 9H or so, the nitrogen atom amount contained inside was 0.005 weight% or so, the maximum holding curvature radius was 2 pi or so, and the water vapor transmission rate (WVTR) was 3.9 to 4.0 g/m²/day or so.

### Example 3.

BTEST (bis(triethoxysilyl) ethane), ethanol (EtOH), water (H₂O) and hydrochloric acid (HCl) were mixed in a weight ratio of 1:6:6:0.01 (BTEST: EtOH: H₂O: HCl) and stirred at 65°C for 1 hour or so to form a silica precursor composition. The silica precursor composition was applied to a glass substrate to a thickness of approximately 10 µm or so by a bar coating method and dried at 80°C for 1 minute or so. After drying, the layer of the silica precursor composition was subjected to atmospheric plasma treatment and then immersed in trioctylamine (TOA) (pKa: 3.5, boiling point: about 366°C, flash point: about 163°C, room temperature vapor pressure: about 0.002 Pa), which was maintained at a temperature of 80°C or so, for approximately 5 minutes or so to form a silica glass film. The formed silica glass film was washed with running water at 60°C or so for 2 minutes or so and dried in an oven at 80°C or so for 1 minute. In the produced glass film, the 500 g steel wool resistance was 8,000 times or so, the pencil hardness was 8H or so, the nitrogen atom amount contained inside was 0.005 weight% or so, the maximum holding curvature radius was 2 pi or so, and the water vapor transmission rate (WVTR) was 3.9 to 4.0 g/m²/day or so.

### Example 4.

TEOS (tetraethoxy silane), ethanol (EtOH), water (H₂O) and hydrochloric acid (HCl) were mixed in a weight ratio of 1:4:4:0.01 (TEOS: EtOH: H₂O: HCl) and stirred at 65°C for 1 hour or so to form a silica precursor composition. Approximately 4 parts by weight of a latent base generator (Formula F below, WPBG-018, WAKO) was mixed therewith relative to 100 parts by weight of the solid content of the silica precursor composition.

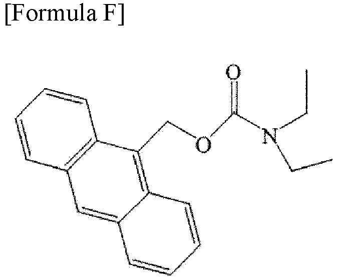

The silica precursor composition mixed with the latent base generator was applied to a glass substrate by a bar coating method and dried at 80°C for 1 minute or so. After drying, the silica precursor composition was irradiated with ultraviolet rays at a light quantity of about 660mJ/cm² using an ultraviolet irradiation instrument (Fusion, D bulb) to form a silica glass film. In the produced glass film, the 500 g steel wool resistance was 6,000 times or so, the pencil hardness was 8H or so, the nitrogen atom amount contained inside was 0.15 to 0.18 weight% or so, the maximum holding curvature radius was 2 pi or so, and the water vapor transmission rate (WVTR) was 3.9 to 4.0 g/m²/day or so.

### Example 5.

BTESE (bis(triethoxysilyl) ethane), ethanol (EtOH), water (H₂O) and hydrochloric acid (HCl) were mixed in a weight ratio of 1:6:6:0.01 (BTESE: EtOH: H₂O: HCl) and stirred at 65°C for 1 hour or so to form a silica precursor composition. Approximately 4 parts by weight of a latent base generator (Formula F below, WPBG-018, WAKO) was mixed therewith relative to 100 parts by weight of the solid content of the silica precursor composition.

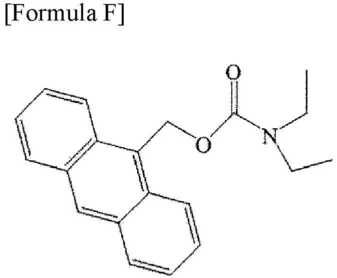

The silica precursor composition mixed with the latent base generator was applied to a glass substrate by a bar coating method and dried at 80°C for 1 minute or so. After drying, the silica precursor composition was irradiated with ultraviolet rays at a light quantity of about 660mJ/cm² using an ultraviolet irradiation instrument (Fusion, D bulb) to form a silica glass film. In the produced glass film, the 500 g steel wool resistance was 7,000 times or so, the pencil hardness was 8H or so, the nitrogen atom amount contained inside was 0.15 to 0.18 weight% or so, the maximum holding curvature radius was 2 pi or so, and the water vapor transmission rate (WVTR) was 3.9 to 4.0 g/m²/day or so.

### Example 6.

TEOS (tetraethoxy silane), ethanol (EtOH), water (H₂O) and hydrochloric acid (HCl) were mixed in a weight ratio of 1:4:4:0.01 (TEOS: EtOH: H₂O: HCl) and stirred at 65°C for 1 hour or so to form a silica precursor composition. Approximately 2 parts by weight of a latent base generator (Formula G below, C11Z, Shikoku chemical) was mixed therewith relative to 100 parts by weight of the solid content of the silica precursor composition.

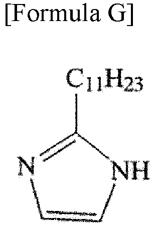

The silica precursor composition mixed with the latent base generator was applied to a glass substrate by a bar coating method and dried at 80°C for 1 minute or so. After drying, the silica precursor composition was maintained at approximately 120°C for 10 minutes to form a silica glass film. In the produced glass film, the 500 g steel wool resistance was 7,000 times or so, the pencil hardness was 9H or so, the nitrogen atom amount contained inside was 0.22 to 0.24 weight% or so, the maximum holding curvature radius was 2 pi or so, and the water vapor transmission rate (WVTR) was 3.9 to 4.0 g/m²/day or so.

### Example 7.

BTESE (bis(triethoxysilyl) ethane), ethanol (EtOH), water (H₂O) and hydrochloric acid (HCl) were mixed in a weight ratio of 1:6:6:0.01 (BTESE: EtOH: H₂O: HCl) and stirred at 65°C for 1 hour or so to form a silica precursor composition. Approximately 2 parts by weight of a latent base generator (Formula G below, C11Z, Shikoku chemical) was mixed therewith relative to 100 parts by weight of the solid content of the silica precursor composition.

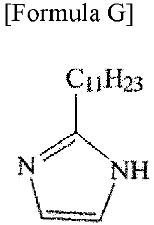

The silica precursor composition mixed with the latent base generator was applied to a glass substrate by a bar coating method and dried at 80°C for 1 minute or so. After drying, the silica precursor composition was maintained at approximately 120°C for 10 minutes to form a silica glass film. In the produced glass film, the 500 g steel wool resistance was 8,000 times or so, the pencil hardness was 8H or so, the nitrogen atom amount contained inside was 0.22 to 0.24 weight% or so, the maximum holding curvature radius was 2 pi or so, and the water vapor transmission rate (WVTR) was 3.9 to 4.0 g/m²/day or so.

### Example 8.

BTESE (bis(triethoxysilyl) ethane), ethanol (EtOH), water (H₂O) and hydrochloric acid (HCl) were mixed in a weight ratio of 1:6:6:0.01 (BTESE: EtOH: H₂O: HCl) and stirred at 65°C for 1 hour or so to form a silica precursor composition. Approximately 2 parts by weight of a latent base generator (Formula H below, C17Z, Shikoku chemical) was mixed therewith relative to 100 parts by weight of the solid content of the silica precursor composition.

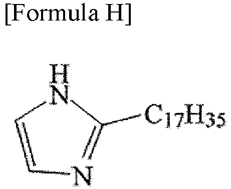

The silica precursor composition mixed with the latent base generator was applied to a glass substrate by a bar coating method and dried at 80°C for 1 minute or so. After drying, the silica precursor composition was maintained at approximately 120°C for 10 minutes to form a silica glass film. In the produced glass film, the 500 g steel wool resistance was 7,000 times or so, the pencil hardness was 7H or so, the nitrogen atom amount contained inside was 0.14 to 0.17 weight% or so, the maximum holding curvature radius was 2 pi or so, and the water vapor transmission rate (WVTR) was 3.9 to 4.0 g/m²/day or so.

### Example 9.

BTESE (bis(triethoxysilyl) ethane), ethanol (EtOH), water (H₂O) and hydrochloric acid (HCl) were mixed in a weight ratio of 1:6:6:0.01 (BTESE: EtOH: H₂O: HCl) and stirred at 65°C for 1 hour or so to form a silica precursor composition. Approximately 2 parts by weight of a latent base generator (Formula I below, 2MZ-H, Shikoku chemical) was mixed therewith relative to 100 parts by weight of the solid content of the silica precursor composition.

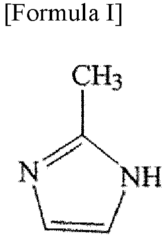

The silica precursor composition mixed with the latent base generator was applied to a glass substrate by a bar coating method and dried at 80°C for 1 minute or so. After drying, the silica precursor composition was maintained at approximately 120°C for 10 minutes to form a silica glass film. In the produced glass film, the 500 g steel wool resistance was 6,000 times or so, the pencil hardness was 7H or so, the nitrogen atom amount contained inside was 0.64 to 0.67 weight% or so, the maximum holding curvature radius was 2 pi or so, and the water vapor transmission rate (WVTR) was 3.9 to 4.0 g/m²/day or so.

### Example 10.

BTESE (bis(triethoxysilyl) ethane), ethanol (EtOH), water (H₂O) and hydrochloric acid (HCl) were mixed in a weight ratio of 1:6:6:0.01 (BTESE: EtOH: H₂O: HCl) and stirred at 65°C for 1 hour or so to form a silica precursor composition. Approximately 2 parts by weight of a latent base generator (Formula J below, 1B2MZ, Shikoku chemical) was mixed therewith relative to 100 parts by weight of the solid content of the silica precursor composition.

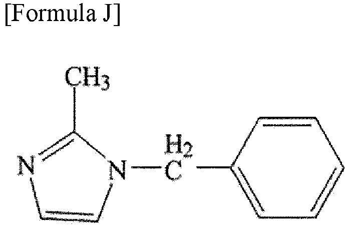

The silica precursor composition mixed with the latent base generator was applied to a glass substrate by a bar coating method and dried at 80°C for 1 minute or so. After drying, the silica precursor composition was maintained at approximately 120°C for 10 minutes to form a silica glass film. In the produced glass film, the 500 g steel wool resistance was 6,000 times or so, the pencil hardness was 6H or so, the nitrogen atom amount contained inside was 0.29 to 0.32 weight% or so, the maximum holding curvature radius was 2 pi or so, and the water vapor transmission rate (WVTR) was 3.9 to 4.0 g/m²/day or so.

### Comparative Example 1.

TEOS (tetraethoxy silane), ethanol (EtOH), water (H₂O) and hydrochloric acid (HCl) were mixed in a weight ratio of 1:4:4:0.01 (TEOS: EtOH: H₂O: HCl) and stirred at 65°C for 1 hour or so to form a silica precursor composition. The silica precursor composition was applied to a glass substrate by a bar coating method and dried at 80°C for 1 minute or so. After drying, the layer of the silica precursor composition was subjected to atmospheric plasma treatment and then immersed in acetic acid, which was maintained at a temperature of 120°C or so, for approximately 10 minutes or so to form a silica glass film. The formed silica glass film was washed with running water at 60°C or so for 2 minutes or so and dried in an oven at 80°C or so for 1 minute. In the produced glass film, the 500 g steel wool resistance was less than 1,000 times or so, the pencil hardness was 1H or so, the nitrogen atoms were not observed inside, the maximum holding curvature radius was 2 pi or so, and the water vapor transmission rate (WVTR) was 3.9 to 4.0 g/m²/day or so.

### Comparative Example 2.

TEOS (tetraethoxy silane), ethanol (EtOH), water (H₂O) and hydrochloric acid (HCl) were mixed in a weight ratio of 1:4:4:0.01 (TEOS: EtOH: H₂O: HCl) and stirred at 65°C for 1 hour or so to form a silica precursor composition. The silica precursor composition was applied to a glass substrate by a bar coating method, dried at 80°C for 1 minute or so, and then maintained at a temperature of 120°C or so for 10 minutes or so to form a silica glass film. The formed silica glass film was washed with running water at 60°C or so for 2 minutes or so and dried in an oven at 80°C or so for 1 minute. In the produced glass film, the 500 g steel wool resistance was less than 1,000 times, the pencil hardness was 2H or so, the nitrogen atoms were not observed inside, the maximum holding curvature radius was 2 pi or so, and the water vapor transmission rate (WVTR) was 3.9 to 4.0 g/m²/day or so.

## Claims

1. A silica glass film, comprising:
a silica network of one or more units selected from the group consisting of units of the following formula A and units of the following formula B; and
nitrogen atoms:
[Formula A] RₙSiO_{(4-n)/2}
[Formula B] SiO_{3/2}L_{1/2}
wherein, the R is hydrogen, an alkyl group, an alkenyl group, an aryl group, an arylalkyl group, an epoxy group or a (meth)acryloyloxyalkyl group, the n is 0 or 1, and the L is a divalent linking group and wherein the divalent linking group is a divalent linking group formed by one or two or more selected from the group consisting of an alkylene group and an arylene group.

2. The silica glass film according to claim 1, wherein the silica glass film has steel wool resistance of 5,000 times or more.

3. The silica glass film according to claim 1, wherein the silica glass film has pencil hardness of 5H or more.

4. The silica glass film according to claim 1, wherein the silica glass film has a maximum holding curvature radius in a range of 1 to 40 pi.

5. The silica glass film according to claim 1, wherein the silica glass film has a water vapor transmission rate (WVTR) of 1 g/m²/day or more.

6. The silica glass film according to claim 1, wherein the silica network does not contain any linkage (Si-N) of a nitrogen atom and a silicon atom.

7. The silica glass film according to claim 1, wherein the nitrogen atoms are comprised in or derived from an amine compound having a pKa of 8 or less.

8. The silica glass film according to claim 1, wherein the nitrogen atoms are comprised in or derived from an amine compound having a boiling point in a range of 80°C to 500°C.

9. The silica glass film according to claim 1, wherein the nitrogen atoms are comprised in or derived from an amine compound having a room temperature vapor pressure of 10,000 Pa or less.

10. [hjs1] The silica glass film according to claim 1, wherein the nitrogen atoms are comprised in or derived from a compound represented by the following formula 6; an ionic compound having a cationic compound represented by any one of the following formulae 8 to 10 or a compound of the following formula [[11]] *13*: 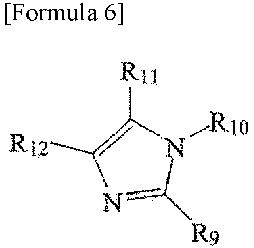 wherein, the R₉ is hydrogen, an alkyl group having 1 to 20 carbon atoms or an aryl group having 6 to 12 carbon atoms, the R₁₁ and R₁₂ are each independently hydrogen or an alkyl group having 1 to 4 carbon atoms, and the Rio is hydrogen, an alkyl group having 1 to 4 carbon atoms, an arylalkyl group having 7 to 16 carbon atoms or a substituent of the following formula 7: 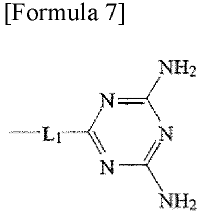 wherein, the L₁ is an alkylene group having 1 to 4 carbon atoms: 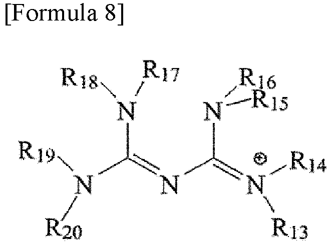 wherein, the R₁₃ to R₂₀ are each independently hydrogen or an alkyl group having 1 to 20 carbon atoms: 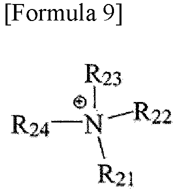 wherein, the R₂₁ to R₂₄ are each independently hydrogen or an alkyl group having 1 to 20 carbon atoms: 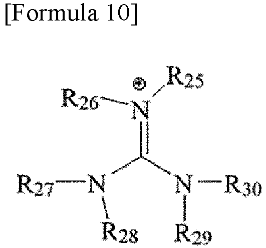 wherein, the R₂₅ to R₃₀ are each independently hydrogen or an alkyl group having 1 to 20 carbon atoms: 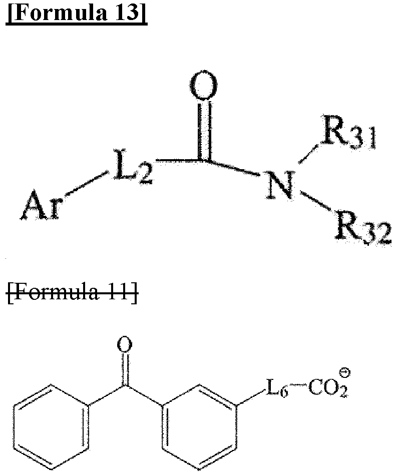 wherein, R₃₁ and R₃₂ are each independently hydrogen, a linear or branched alkyl group having 1 to 4 carbon atoms or a cyclic alkyl group having 4 to 8 carbon atoms, or R₃₁ and R₃₂ are linked to each other to form a nitrogen-containing heterocyclic structure together with the nitrogen atom to which R₃₁ and R₃₂ are linked, Ar is an aryl group, and L₂ is -L₃-O- or an alkenyl group having 2 to 4 carbon atoms, where L₃ is an alkylene group having 1 to 4 carbon atoms or an alkylidene group having 1 to 4 carbon atoms.

11. The silica glass film according to claim 1, wherein an amount of the nitrogen atoms is in a range of 0.0001 to 6 weight%.

12. A laminate, comprising:
the silica glass film of claim 1; and
an organic film in contact with the glass film.

13. The laminate according to claim 12, wherein the organic film is a cured resin film or a polymer film.

14. The laminate according to claim 12, wherein the organic film is a retardation film, a polarizing film, a luminance enhancement film, a high refractive film, a low refractive film or a hard coating film.
